# EUROPÄISCHE PATENTSCHRIFT

(11) **EP 1 000 259 B1**
(45) Veröffentlichungstag und Bekanntmachung des Hinweises auf die Patenterteilung: **17.03.2010**
(21) Anmeldenummer: 98942576.4
(22) Anmeldetag: 20.07.1998
(51) Int. Cl.: F16C 9/04, F16C 33/14, C23C 4/00, F16C 33/10

(54) **PLEUEL MIT EINEM MEHRLAGIGEN THERMISCH GESPRITZTEN PORÖSEN LAGERSCHICHT**
CONNECTING ROD WITH A MULTILAYERED THERMALLY SPRAYED POROUS BEARINGLAYER
BIELLE AVEC PALIER LISSE À PLUSIEURS COUCHES POREUX FORMÉ PAR COUCHAGE THERMIIQUE

(30) Priorität: 28.07.1997 DE 19732401
(43) Veröffentlichungstag der Anmeldung: 17.05.2000
(73) Patentinhaber: Volkswagen Aktiengesellschaft, 38436 Wolfsburg (DE)
(72) Erfinder: SCHLEGEL, Udo, D-38159 Vechelde (DE); VOGELSANG, Reinhard, 38226 Salzgitter (DE)
(74) Vertreter: Pohlmann, Bernd Michael
(86) Internationale Anmeldenummer: PCT/EP1998/004497
(87) Internationale Veröffentlichungsnummer: WO 1999/006723

(56) Entgegenhaltungen:
- EP-A- 0 600 468
- WO-A1-97/16578
- DE-A- 4 303 592
- GB-A- 1 083 003
- GB-A- 1 531 222
- US-A- 4 523 365
- US-A- 5 458 984

## Beschreibung

Die Erfindung betrifft ein Verfahren zum Herstellen eines Pleuels gemäß dem Oberbegriff des Anspruchs 1 sowie ein Pleuel gemäß dem Oberbegriff des Anspruchs 24.

Die heute zum Einsatz kommenden Pleuel, insbesondere für Brennkraftmaschinen, werden als sogenannte geschnittene Pleuel oder als Crackpleuel ausgeführt. Geschnitten oder gecrackt wird hierbei das große Pleuelauge, das die Kurbelwelle umgreift. Das kleine Pleuelauge braucht in der Regel nicht geöffnet zu werden, da es über einen geraden Bolzen mit dem Kolben verbunden wird.

Je nach Lagerbelastung, werden die Pleuelaugen mit unterschiedlichen Lagerschalen (Gleitlager) ausgestattet. Als Lagerschalen kommen insbesondere Stützschalenwerkstoffe zum Einsatz, die in der Regel aus Stahl C 10 nach DIN 17210 bzw. SAE 1010 gebildet sind. Die Lagerschalen können je nach Bauform und Verwendung kalt verfestigt sein. Auf diesen Stützschalenwerkstoff kann die eigentliche Gleitlagerlaufschicht, beispielsweise Weißmetall, Bleibronze, Leichtmetall, Spatterschichten o. ä., in Abhängigkeit der zu erwartenden Lagerbelastung aufgebracht werden. Die Ausführung der Lagerschalen kann als Dreistoff-, Zweistoff- oder Massivlagerschale oder anderes erfolgen. Damit die Lagerschalen nach der Montage einen einwandfreien Festsitz erreichen, werden die Lagerschalen mit einer Vorspannung montiert.

Die Lagerschalen stellen nicht nur einen materiellen Kostenfaktor dar, sie beinhalten auch einen Produktionsaufwand und stellen eine Fehlerquelle dar. So kann beispielsweise bei der Montage der Einsatz einer Lagerschale oder Lagerschalenhälfte vergessen werden, wodurch es zu erheblichen Motorschäden kommt.

Aus der gattungsbildenden DE 43 03 592 A ist bereits ein Verfahren zum Herstellen eines Pleuels mit einem Pleuelauge, in dem eine Lagerschicht angeordnet ist, die durch thermisches Spritzen eines Lagerwerkstoffs auf das Pleuelauge aufgebracht wird, bekannt, wobei die Lagerschicht eine gewisse Porösität aufweist.

Aufgabe der Erfindung ist es, ein Pleuellager zu schaffen, mit dem es möglich ist, auf eine einfache Weise einen Ausgleich von Schichteigenspannungen und eine hohe Haftzugfestigkeit der Lagerschicht zu erreichen.

Diese Aufgabe wird erfindungsgemäß mit den Merkmalen der unabhängigen Patentansprüche gelöst.

Die Unteransprüche zeigen bevorzugte Ausführungsformen.

In ein Pleuelauge, hierbei handelt es sich insbesondere um das große Pleuelauge, ggf. auch beide Pleuelaugen, wird nicht mehr eine Lagerschale eingesetzt, sondern die Lagerschicht wird direkt durch thermisches Spritzen auf dem Pleuelauge aufgebracht. Als thermisches Spritzen kommt insbesondere Plasmaspritzen zum Einsatz. Die Pleuel sind insbesondere Teile einer Verbrennungskraftmaschine. Zur Erhöhung der Restölmenge auf der Lagerschicht weist diese eine Nut auf und/oder ist microporös.

Die betriebssichere Gestaltung von Pleuellagern verlangt eine verschleißsichere Auslegung und Konstruktion der Lager, um die Lagerkräfte sicher und bei noch zulässigen Temperaturen zu übertragen. Verschleißsicherheit ist immer dann gegeben, wenn die Gleitflächen durch einen tragfähigen Schmierfilm (Ölfilm) voneinander getrennt sind. Ein solcher Schmierfilm ergibt sich bei Gleitlagern durch eine schwach-exzentrische Wellenlagerung. Die rotierende Welle hat hierdurch eine Pumpwirkung, die den Schmierstoff (Motoröl) in den (exzentrischen) Lagerspalt fördert, wobei an den konvergenten Lagerspalten der Öldruck aufgebaut wird. Das heißt, das Schmiermittel wird in den engsten Querschnitt gepreßt. Hierbei entsteht ein Zustand der "Grenzschmierung" (Grenzflächenreibung - Lagermaterial auf Wellenzapfen), wenn die Drehbewegung der Welle beginnt bzw. sehr langsam ist. Eine Zunahme der Drehbewegung bewirkt, daß sich der Ölfilm am Tragen des Wellenzapfens beteiligt, obwohl noch kein zusammenhängender Ölfilm aufgebaut ist. Dies ist ein Zustand der "Mischreibung", d.h. gleichzeitige Grenzflächen- und Schwimmreibung. Dieser Zustand liegt überwiegend beim Anlassen und Abstellen eines Motors vor. Eine weitere Zunahme der Rotationsgeschwindigkeit bewirkt dann die Ausbildung der hydrodynamisch tragenden Schmierfilmschicht mit der Dicke eines halben Lagerspiels. Dieser Zustand ist die "Schwimmreibung". Das Lagerspiel beträgt hierbei üblicherweise 15 bis 60 µm.

Durch die Plasmabeschichtung des (großen) Pleuelauges mit einem entsprechenden Lagermaterial sowie die Erzeugung von Mikroporen und ggf. einer Nut innerhalb der Gleitlagerschicht wird ein hohes Ölrückhaltevolumen innerhalb des Pleuellagers erreicht, wodurch die Reibung und damit der Verschleiß der gegeneinander bewegten Teile, insbesondere bei der Grenzschmierung und der Mischreibung, vermindert sind. Deutlich verbessert wird das Ölrückhaltevolumen durch das Einbringen mindestens einer Nut in das Pleuellager, wobei diese Nut (bzw. Nuten) besonders vorteilhaft als Radialnuten ausgebildet sind. Zur weiteren Erhöhung des Ölrückhaltevermögens beläßt man diese Nuten (zumindest weitgehend) unbearbeitet, d.h. mit der herstellungsbedingten rauhen Oberflächenstruktur.

Die poröse, aber druckstabile Oberflächenstruktur der Gleitlagerfläche, die vorteilhaft spanabhebend bearbeitet ist, und die unbearbeitete Nut mit sehr rauher Oberflächenstruktur bewirken in jedem Lagerzustand, unabhängig von Drehbewegung und Öldruck, daß ein gewisser Ölanteil im Lager gespeichert ist. Hierdurch wird es ermöglicht, den Zustand der Grenzflächen- und Mischreibung schon bei einer geringen Kurbelwellendrehzahl zu durchfahren und damit schneller den Zustand der (nahezu) verschleißfreien hydrodynamischen Schmierung zu erreichen. Das heißt, die Notlaufeigenschaften beim Motoranfahr- und -auslaufzustand werden wesentlich verbessert, wodurch höhere Lagerbelastungen bei gleichen Lagerdimensionen möglich sind.

Das Aufbringen eines Lagerwerkstoffs durch thermisches Spritzen hat folgende Vorteile: Es können die sonst bei Pleueln üblichen Lagerschalen, die die Gleitlagerfläche bilden, entfallen, da die Lagerbeschichtung auf den Pleuelwerkstoff (und nicht auf ein extra einzusetzendes Element) aufgebracht werden kann. Hierdurch entfällt auch gleichzeitig die Montage der Lagerschalen. Durch den Wegfall der Lagerschalen und/oder durch eine spanabhebende Nachbearbeitung der Gleitlagerschicht erreicht man eine Reduzierung der Toleranzen. Bei den üblichen Pleuellagern hat man drei Toleranzen, die erste Toleranz ist die der Kurbelwelle, die zweite Toleranz wird von der Gleitschicht (der Lagerschalen) im Pleuel und die dritte Toleranz vom Pleuelauge, in das die Lagerschale eingesetzt wird, bestimmt. Durch die Beschichtung und Nachbearbeitung der Lagerschicht entfällt die dritte Toleranz. Weiterhin hat man eine größere Materialstärke im Schraubenbereich, da die aufgetragene Lagerschicht eine geringere Stärke hat als eine Lagerschale; hierdurch werden auch höhere Belastungen bei gleichen äußeren Pleuelabmessungen möglich. Die dritte Toleranz (die Toleranz des Pleuelauges) kann sehr grob bemessen werden, da sie durch die nachfolgende Beschichtung, die auf das zweite Toleranzmaß, beispielsweise durch Feinspindeln, abgetragen wird, ausgeglichen wird.

Die Lagerschicht wird derart aufgespritzt, daß sie zumindest in der Oberfläche eine gewisse Porosität hat. Diese Porosität wird dadurch erreicht, daß die Lagerschicht mit Mikroporen hergestellt wird, die beispielsweise durch Oxideinschlüsse gebildet werden, die bei der Nachbearbeitung der Schichtoberfläche freigelegt werden. Der Porositätsanteil liegt im Laufflächenbereich vorteilhaft bei 0,2 bis 6 % und insbesondere beträgt er 0,5 bis 4 %. Vorteilhaft sind die Mikroporen außerdem nicht miteinander verbunden, so daß das Porenvolumen der Mikroporen überwiegend von geschlossenen Poren gebildet ist. Diese Mikroporen bilden ein hydrodynamischen Mikrodruckkammer-Schmiersystem, wobei die Mikroporen beispielsweise durch den spanabhebenden Vorgang der Oberflächenbearbeitung (beispielsweise Feinspindeln) offengelegt werden. Die Poren innerhalb der Gleitlagerfläche dienen hierbei als Ölrückhaltekammern, so daß im Moment des Motorstartes bzw. Motorauslaufes und der beginnenden bzw. nachlassenden Rotation der Kurbelwelle, vermutlich durch Adhäsion des Motorenöles aus den Mikroporen mit der Kurbelwelle, noch ein ausreichendes Ölvolumen zur Gleitfilmbildung (Schwimmreibung) zur Verfügung steht, obwohl der Öldruck im Gleitlager bereits abgefallen ist bzw. erst aufgebaut werden muß. Durch das vorhandene Mikrodruckkammersystem kann der Bereich der Mischreibung wesentlich verkürzt werden. Hierdurch werden auch die Notlaufeigenschaften des Lagers, ohne Einbringung von zusätzlichen Gleitlagerstoffen wie Blei-, Zinn- oder Nickellegierungen o.ä. wesentlich erhöht. Vorteilhaft wird die Größe der Poren und das Porenvolumen je nach Lagerbelastung der Gleitoberfläche beim thermischen Spritzen eingestellt. Üblicherweise befindet sich der überwiegende Teil des Porenvolumens in Poren der Größe 0,2 bis 250 µm, insbesondere 1 bis 50 µm.

Der übliche Ablauf bei der Herstellung der Lagerschicht ist wie folgt: Zuerst wird die zu beschichtende Substratoberfläche (beispielsweise das große Pleuelauge) gereinigt, insbesondere von Fett befreit. Dies erfolgt beispielsweise mittels Heißdampf. Anschließend wird die Substratoberfläche sandgestrahlt, beispielsweise mit Al₂0₃. Der Strahldruck liegt vorteilhaft bei 3 bis 8 bar und insbesondere bei 4 bis 6 bar, wobei bevorzugt mit unterschiedlichen Körnungen gearbeitet wird. Vorteilhaft wird hierbei eine ansteigende Körnung eingesetzt, d.h. zunächst wird mit einem feineren Korn und dann mit einem gröberen Korn sandgestrahlt. Ganz besonders vorteilhaft werden mindestens drei unterschiedliche Körnungen eingesetzt. Die Körnungen liegen hierbei im üblichen mesh-Bereich, wobei für die feine Körnung vorteilhaft mesh 80 und kleiner, insbesondere mesh 100 bis mesh 230 eingesetzt wird. Für die mittlere Körnung wird vorteilhaft eine Korngröße mit mesh 100 oder größer, insbesondere bis mesh 40 und besonders vorteilhaft mesh 80 bis mesh 45 eingesetzt. Für die grobe Körnung kommt vorteilhaft ein Korn mit mesh 45 oder größer und insbesondere mesh 30 oder größer zum Einsatz, vorteilhaft bis mesh 16 (600 µm bis 1,18 mm Standardsiebgröße).

Mit den unterschiedlichen Körnungen beim Sandstrahlen erreicht man auch im Bereich einer Kerbe, beispielsweise einer Bruchkerbe oder einer Nut, eine gute Oberflächenrauhigkeit, wobei im glatten Bereich eine Oberflächenstruktur mit einer Mittenrauhtiefe RA von ca. 5 bis 10 µm und insbesondere 6,5 bis 8 µm erzielt wird, bei RZ ca. 35 bis 60 µm und insbesondere 42 bis 54 µm. Mit solchen Sandstrahlrauhigkeiten wird eine besonders gute Haftzugfestigkeit der thermisch gespritzten Schicht auf dem Pleuel erreicht.

Anschließend erfolgt eine Plasmabeschichtung, beispielsweise mit einer AlCuFe-Legierung (Aluminiumbronze). Erfindungsgemäß wird die thermisch gespritzte Lagerschicht mit einer steigenden Porosität hergestellt, wobei als erstes eine Schicht mit einer geringen Porosität (≤ 2 %, insbesondere ≤ 1 %) hergestellt wird. Hierfür eignet sich beispielsweise eine Pulverkorngröße um 38 µm (400 mesh). Diese untere Beschichtung wird in einer Schichtdicke von ca. 100 bis 300 µm, insbesondere 200 bis 250 µm, hergestellt. Hierauf wird dann eine Schicht mit einer Porosität von ca. 2 bis 6 %, insbesondere 2,5 bis 4 % erzeugt, wobei beispielsweise ein Pulverkorn der Größe um ca. 63 µm (mesh 230) eingesetzt wird. Die Pulverkorngröße ist hierbei so gewählt, daß mindestens 40 Gew.-%, insbesondere mindestens 50 Gew.-% des Pulvers kleiner oder gleich der Standardsiebgröße ist, vorteilhaft liegen mindestens 70 Gew.-% und insbesondere mindestens 80 Gew.-% innerhalb der nächsten Klasse und weiterhin liegen vorzugsweise mindestens 90 Gew.-% innerhalb des doppelten Durchmessers (halbe mesh-Größe).

Die Schichtdicke wird hierbei ebenfalls in dem für die untere Beschichtung angegebenen Bereich gewählt.

Der Auftrag der Lagerschichten erfolgt vorzugsweise in einem Arbeitsgang, d.h. der Beschichtungsablauf wird nicht unterbrochen. Hierzu erfolgt vorteilhaft eine automatische Pulver- und/oder Parameteranpassung, um die unterschiedlichen Porositäten zu erreichen.

Die untere Lagerschicht deckt vorteilhaft die Unrundheit, die beispielsweise durch das Cracken des Pleuels beim Aufbrechen der Lagerschale entsteht (typische Unrundheit 30 bis 150 µm) ab, und kann zur Erreichung einer für eine spätere Nachbearbeitung genügenden Dicke mit weiteren, poröseren Schichten, die verfahrenstechnisch einfacher auf das Lagermaterial des Pleuels aufgebracht werden können, abgedeckt werden. Diese Schicht wiederum kann ohne größere Probleme bis in die eigentliche Gleitiagerschicht (gering poröse Schicht) abgetragen werden. Durch diese erfindungsgemäße Verfahrensweise erreicht man einen Ausgleich der Schichteigenspannung, ein geringes Ausglühen des Pleuels und hohe Haftzugfestigkeiten der Gleitlagerschicht, die üblicherweise ≥ 20 N/mm² und insbesondere ≥ 25 N/mm² liegen. Auch Haftzugfestigkeiten oberhalb 28 N/mm² sind möglich. Mit Aluminiumbronze läßt sich beispielsweise eine Schichthärte von ca. 185 HV_{0.3} erreichen.

Für höherbelastete Gleitlagerschichten im Pleuel, insbesondere dem großen Pleuelauge, wie sie vorwiegend bei Dieselmotoren vorliegen, ist es vorteilhaft, die Restölmenge innerhalb der Gleitlagerschicht zu erhöhen. Dies erfolgt durch eine Vergrößerung des Ölrückhaltevolumens bei Motorstillstand bzw. bei einer Motordrehzahl unterhalb der Leerlaufdrehzahl durch Einbringen einer oder mehrerer Schmiernuten in die Gleitlagerschicht. Hierdurch wird beim Motorstart oder Motorauslauf der Bereich der Mischreibung in einer kürzeren Zeit durchlaufen. Diese kürzere Zeit ist ein Resultat einer längeren Aufrechterhaltung bzw. schnelleren Bildung des Gleitfilms, der durch Adhäsion des Motoröles aus den Mikroporen und der oder den Nuten mit der Kurbelwelle resultiert. Durch das Einbringen mindestens einer Nut in die Lagerschicht, insbesondere mit einer etwas porösen Oberfläche, wird erreicht, daß der Schmierfilm "länger" hält, obwohl der Öldruck der Pumpe bereits abgefallen ist bzw. gerade aufgebaut wird. Besonders vorteilhaft ist der Nuteneffekt, wenn die Nuten überwiegend radial, d.h. in Umfangsrichtung, verlaufen. Besonders bevorzugt sind die Nuten dabei in sich geschlossen, d.h. eine Endlosnut und insbesondere eine ringförmige Endlosnut. Die Nut ist vorteilhaft in einer V- bzw. Trapezform ausgebildet, wobei die Seiten der Nut in einem Winkel von vorzugsweise 30 bis 80° und insbesondere 45 bis 60° zueinander stehen. Als Nuttiefe ist eine Tiefe im Bereich 0,2 bis 1 mm und insbesondere 0,4 bis 0,6 mm geeignet. Die Anzahl der Nuten richtet sich vorzugsweise nach der Gleitlagerbreite, dem Traganteil des Gleitlagers und dem erforderlichen zusätzlichen Ölrückhaltevolumen. Die angegebene Nutenform und -tiefe beziehen sich vorteilhaft auf den Zustand vor einer thermisch gespritzten Beschichtung. Als thermisch gespritzte Beschichtung kommt besonders bevorzugt das Plasmaspritzen zum Einsatz.

Die Substratoberfläche wird nach dem Einbringen der einen oder mehreren Rillen mit der Verbundlagerschicht mit unterschiedlicher Porosität, die oben beschrieben ist, beschichtet. Bei der anschließenden Nachbearbeitung der Lagerfläche werden vorzugsweise die Nuten nicht oder weniger nachgearbeitet, so daß die rauhe (Plasma-)Schichtstruktur eine besonders gute Ölrückhaltung bewirkt.

Bei dem Aufspritzen der Lagerschicht wird vorteilhaft ein Metall aufgespritzt, wobei bevorzugt Metallegierungen zum Einsatz kommen. Weiterhin kommt bevorzugt ein Gemisch verschiedener Metalle (insbesondere Metallegierungen) zum Einsatz. Ein solches Gemisch kann beispielsweise eine Mischung aus Aluminium und Zinn sein, wobei die Mischung besonders vorteilhaft durch Mischen der einzelnen Komponenten in Pulverform erhalten wird. Die Klassifikation des Metallpulvers ist u.a. von den einzelnen Spritzparametern abhängig und kann von dem Fachmann durch Versuchsreihen leicht ermittelt werden. Als Lagerwerkstoffe werden vorteilhaft eingesetzt Bronzen, insbesondere Aluminiumbronze (Aluminium/Zinn), aber auch Kupferbronze sowie auch Metall-Weichstoff-Schichten und/oder Metall-Festschmierstoff-Schichten. Als Weichstoff kommen beispielsweise weiche Metalle, wie Blei zum Einsatz, die in einem härteren Metall, wie beispielsweise legiertem Aluminium (Aluminium/Kupfer/Magnesium/Chrom) verteilt sind. Als Weichstoffe können aber auch andere Materialien, wie beispielsweise Fluorpolymere (z. B. Polytetrafluorethylen) eingesetzt werden. Als Festschmierstoff eignen sich beispielsweise Verbindungen wie Molybdändisulfid, Bornitrit oder Graphit.

Besonders vorteilhaft wird der Lagerwerkstoff mit Übermaß aufgespritzt, das anschließend mechanisch nachbearbeitet wird. Zum Nacharbeiten kommt beispielsweise ein Honen zum Einsatz, insbesondere ist hier Feinspindeln geeignet. Beim Honen werden bevorzugt 20 bis 300 µm und insbesondere 50 bis 200 µm des Lagerwerkstoffes abgetragen; beim Feinspindeln beträgt das Übermaß vorteilhaft 50 bis 1 000 µm und insbesondere 100 bis 500 µm.

Die fertige Lagerschicht (nach dem Abtragen des Übermaßes) beträgt vorzugsweise 150 bis 800 µm und insbesondere 200 bis 500 µm. Eine solche Schicht ist erheblich dünner als die üblichen Lagerschalen, deren Dicke im Bereich 2,5 mm liegt. Dies bedeutet, daß am Pleuel entweder mehr Material bestehen bleibt (höhere Belastung möglich), oder daß die Pleuel mit einem geringeren Gewicht hergestellt werden können.

Das Pleuetauge, das mit dem Lagerwerkstoff durch thermisches Spritzen beschichtet wird, kann vorteilhaft erst nach dem Aufbringen des Lagerwerkstoffes geöffnet werden. Diese Verfahrensweise kommt besonders dann zum Einsatz, wenn das Pleuelauge aufgebrochen (gecrackt) wird. Bei diesem Verfahren wird das Pleuelauge (innen) mit je einer Kerbe an den gewünschten Bruchstellen verstehen. Die Kerben werden besonders vorteilhaft mittels eines Lasers eingebracht, wobei beispielsweise ein FK-Laser unter ca. 45° in das Pleuelauge eingefahren wird. Als Laserleistung kommen insbesondere 5 bis 10 kW zum Einsatz. Die Kerbe wird vorteilhaft in einer Breite von 0,3 bis 0,8 mm und in einer Tiefe von 0,2 bis 0,7 mm eingebracht. Die Bruchstelle sitzt üblicherweise in etwa mittig in dem Pleuelauge. Alternativ kann die Kerbe auch durch Erodieren oder über ein Räumwerkzeug, beispielsweise durch Stoßen, eingebracht werden.

Beim Kerben und Brechen des Pleuelauges erfolgt der Verfahrensablauf vorteilhaft derart, daß zuerst das Pleuelauge gekerbt (z.B. mit einem Werkzeug, Laser oder durch Erodieren) wird, dann wird der Lagerwerkstoff durch thermisches Spritzen aufgebracht und anschließend erfolgt das Brechen. Durch diese Verfahrensweise entfällt der Spalt (bzw. wird minimiert) der sonst an der Bruchstelle bzw. zwischen den einzelnen Lagerschalen besteht. Ein solcher Spalt fördert bei einer hohen Motorbelastung den Abriß des Ölfilms. Durch die Verfahrensweise des Kerbens vor dem Beschichten des Lagerwerkstoffes erreicht man bessere Schmiereigenschaften. Unter Umständen kann auch ein Brechen vor dem Beschichten des Lagerwerkstoffes erfolgen, der dann anschließend nochmal (bevorzugt ohne Kerbung) gebrochen wird.

Wenn das Pleuelauge durch Aufschneiden geöffnet wird, erfolgt dies vorzugsweise vor dem Aufbringen des Lagerwerkstoffes durch thermisches Spritzen. Bei dieser Verfahrensweise wird das Pleuelauge aufgeschnitten und die Trennflächen der verbliebenen Pleuelstange und des Pleueldeckels werden einzeln glatt geräumt. Die Teile werden anschließend wieder zusammengesetzt, mit Bohrungen und Gewinden versehen und zusammengeschraubt. Vorteilhaft wird in das wieder zusammengeschraubte Pleuelauge auch hier eine Kerbe (an der Trennstelle) eingebracht, insbesondere vor dem Beschichten mit dem Lagerwerkstoff. Anschließend wird das Pleuelauge zur Trennung der Lagerschicht vorteilhaft wieder aufgebrochen. Wenn das Brechen hierbei zu ungleichmäßig erfolgt, muß die Lagerschicht selbst gekerbt werden.

Das oben beschriebene Bearbeiten der Lagerschicht (Honen oder Spindeln) erfolgt besonders vorteilhaft erst nach dem Öffnen des Pleuelauges. Hierdurch wird ein eventuell beim Brechen der Lagerschicht entstehender Grat an der Bruchkante gleichzeitig mit der Entfernung des Übermaßes entfernt.

In das erfindungsgemäß hergestellte Pleuel kann auch ein Ölkanal in das Pleuelauge eingebracht werden. Dieser Ölkanal wird vorteilhaft erst nach dem Aufbringen der Lagerschicht und insbesondere nach deren Nachbearbeitung in das Pleuelauge gebohrt. Der Ölkanal kann hierbei auch durch die Pleuelstange hindurch zu dem gegenüberliegenden Pleuelauge gebohrt werden.

Auch die Planflächen (große Seitenflächen) des erfindungsgemäßen Pleuels werden vorteilhaft erst nach dem Aufbringen der Lagerschicht nachgearbeitet. Die Nachbearbeitung erfolgt hier vorzugsweise durch Schleifen der Planflächen.

Bei dem erfindungsgemäßen Verfahren wird dem Beschichten vorteilhaft ein Arbeitsschritt vorgeschaltet, in dem das Pleuelauge aufgerauht wird. Besonders vorteilhaft erfolgt das Aufrauhen durch Sandstrahlen, es ist jedoch auch ein Strahlen mit einer unter hohem Druck stehenden Flüssigkeit möglich. Das Material des Auges, insbesondere ein C 70 Stahl , wird hierbei vorteilhaft auf eine Mittenrauhtiefe Rₐ von 4 bis 30 µm, insbesondere 8 bis 12 µm aufgerauht. Bei solchen Mittenrauhtiefen wird eine besonders gute Haftung des Lagerwerkstoffes auf dem Material des Pleuelauges erreicht.

Für eine besonders vorteilhafte Fertigung der Lagerschicht in dem Pleuelauge wird mindestens eine der Planflächen des Pleuelauges mit einer Schablone abgedeckt, die eine Öffnung im Bereich des Pleuelauges aufweist. Diese Öffnung soll in etwa gleich groß sein wie das Pleuelauge, so daß der Beschichtungsvorgang durch die Schablone zum einen nicht gestört wird und zum anderen eine Beschichtung der Planfläche im Bereich des Pleuelauges weitgehend vermieden wird. Wenn nur eine Planfläche mit der Schablone abgedeckt wird, dann liegt die andere Planfläche vorteilhaft auf einer Palette, die im Bereich des Pleuelauges ebenfalls eine Öffnung, wie die Schablone, aufweist.

Die Pleuelaugen einzelner Pleuel werden vorteilhaft in einem Arbeitsgang beschichtet. Hierzu liegen mehrere Pleuel, vorteilhaft 2 bis 10 und insbesondere 4 bis 8 derart übereinander, daß die zu beschichtenden Pleuelaugen einen Zylinder bilden. Hierzu kann auf einer Spezialpalette eine die Pleuel zentrierende Halterung vorgesehen sein, in die die Pleuel eingelegt werden. Vorteilhaft werden die bei diesem Verfahren praktisch gleichzeitig beschichteten Pleuel als Gruppe beibehalten, um anschließend in einer Verbrennungskraftmaschine gemeinsam verbaut zu werden. Vorteilhaft werden alle (gleichartigen) Pleuel einer Verbrennungskraftmaschine durch Übereinanderlegen gemeinsam beschichtet. Wenn dies wegen der Anzahl der Zylinder (beispielsweise 12-Zylinder) konstruktiv nicht möglich ist, dann werden zumindest die Pleuel einer Zylinderreihe (6 beim V 12-Motor) übereinanderliegend beschichtet. Mit dieser Verfahrensweise wird erreicht, daß Pleuel gleicher Qualität in einer Verbrennungskraftmaschine verbaut werden.

Während des thermischen Spitzens wird besonders vorteilhaft ein Gasstrom durch das Pleuelauge hindurchgeführt, insbesondere wenn mehrere Pleuel übereinanderliegend beschichtet werden. Als Gasstrom eignet sich insbesondere Luft, die konditioniert und gereinigt wird. Insbesondere soll der Luftstrom praktisch frei von Fett und Feuchtigkeit sein und möglichst in einem vorgegebenen Temperaturbereich (um ca. 20°C) liegen. Der Luftstrom hat vorteilhaft eine Strömungsgeschwindigkeit (Luftsinkgeschwindigkeit) von 3 bis 15 m/s und insbesondere 5 bis 8 m/s. Mit dem Gasstrom wird ein beim Spritzen entstehender Overspray weggeblasen.

Das Spritzen des Lagerwerkstoffes erfolgt vorzugsweise mit einer rotierenden Spritzdüse, die insbesondere bereits oberhalb des Pleuelauges rotierend in das Pleuelauge (bzw. die Pleuelaugen) eingefahren wird. Mit einer solchen Spritzdüse wird eine besonders gleichmäßige Beschichtung im Pleuelauge erreicht. Die Spritzdüse wird bei dem erfindungsgemäßen Beschichten des Pleuelauges mit einem Vorschub von vorzugsweise 0,5 bis 20 mm/s, insbesondere 2 bis 8 mm/s in das Pleuelauge hinein und durch dieses hindurchgeführt.

Beim Spritzauftrag werden besonders bevorzugt mehrere Schichten des Lagerwerkstoffes auf dem Pleuelauge aufgetragen, wobei insbesondere 4 bis 30 Schichten in dem Pleuelauge gebildet werden. Die Schichten werden dabei vorteilhaft in unterschiedlichen Richtungen aufgetragen, was wiederum der Verbesserung der Schichtqualität dient. Dies wird beim Pleuelauge dadurch erreicht, daß die Spritzdüse das Pleuelauge während des Hineinfahrens und während des Hinausfahrens beschichtet, wobei eine rotierende Spritzdüse vorzugsweise ihre Rotationsrichtung beibehält.

Werden die Pleuel in einer Serienfertigung mit dem Lagerwerkstoff beschichtet, ist es vorteilhaft, wenn zumindest einzelne Pleuel der Serie vermessen werden. Vermessen wird hierbei insbesondere die Mittenrauhtiefe Rₐ und/oder der Lagerwerkstoff selbst (z. B. die Gleichmäßigkeit der Verteilung des Lagerwerkstoffes beim Einsatz eines Gemisches). Besonders bevorzugt erfolgt das Vermessen der Pleuel zerstörungsfrei.

Die Erfindung wird im folgenden anhand von Zeichnungen und Ausführungsbeispielen näher beschrieben.

Es zeigen:
- Figur 1: ein Pleuel in Frontansicht;
- Figur 2: das Pleuel in Seitenansicht;
- Figur 3: einen Schichtaufbau in dem großen Pleuelauge;
- Figur 4: einen Pleueldeckel mit einem Kurbelwellenlagerzapfen und mikroporöser Lagerschicht;

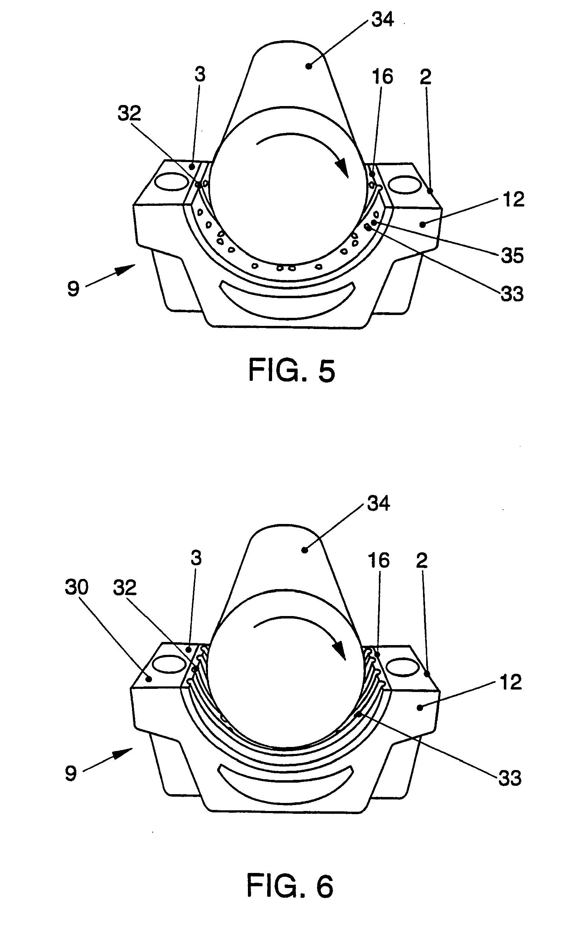

- Figur 5: den Pleueldeckel aus Figur 4 mit einer Radialschmiernut; und
- Figur 6: einen Pleueldeckel mit mehreren Radialschmiernuten.

### Fertigungsablauf Crackpleuel

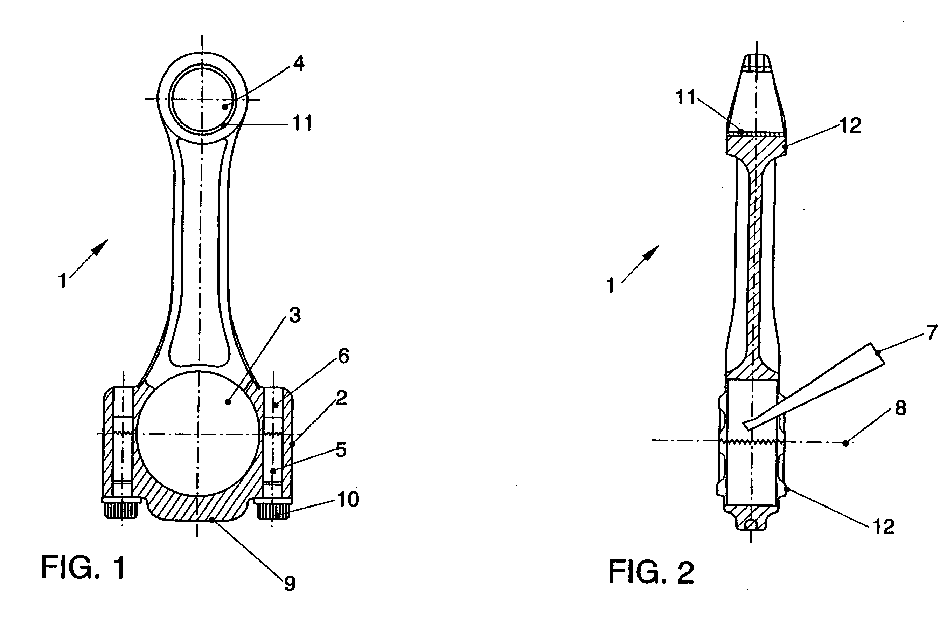

Übliche Pleuel 1 (Fig. 1 und 2), wie sie beispielsweise bisher mit Lagerschalen versehen wurden, z. B. aus C 70 Stahl, werden auf eine Fertigungsstraße gelegt. Hieran schließt sich das Vorschleifen der Seitenflächen 2 an. Anschließend werden das große und das kleine Pleuelauge 3,4 vorbearbeitet, d. h. auf Maß gebracht. Außerdem erfolgt die Schraublochbearbeitung für den Pleueldeckel 9 in den Seitenflächen 2, d. h. es werden Bohrungen 5 und Gewinde 6 eingebracht.

Zur Vorbereitung des Crackens wird in das große Pleuelauge 3 ein FK-Laser 7 unter einem Winkel von 45° eingefahren. Mittels des Lasers 7 wird beidseitig und mittig in das große Pleuelauge 3 je eine Kerbe 8 in einer Breite von ca. 0,5 mm und einer Tiefe von ca. 0,3 bis 0,5 mm eingebrannt. Alternativ kann die Kerbe auch über ein Räumwerkzeug eingebracht werden.

Nachdem die Kerben 8 eingebracht wurden, wird das große Pleuelauge 3, wie weiter unten beschrieben, plasmabeschichtet. Nach dem Auftrag der Plasmaschicht wird das große Pleuelauge 3 zusammen mit der Plasmaschicht über eine Brechvorrichtung mit einer Brechkraft von ca. 100 kN gecrackt. Die Bruchstelle wird gereinigt (mit Druckluft abgeblasen) und der abgebrochene Pleuellagerdeckel 9 mit Schrauben 10 mit dem vorgesehenen Drehmoment montiert. Auch das kleine Pleuelauge wird durch Einpressen einer Buchse 11 montiert. Danach werden die Planflächen 12 fertiggeschliffen.

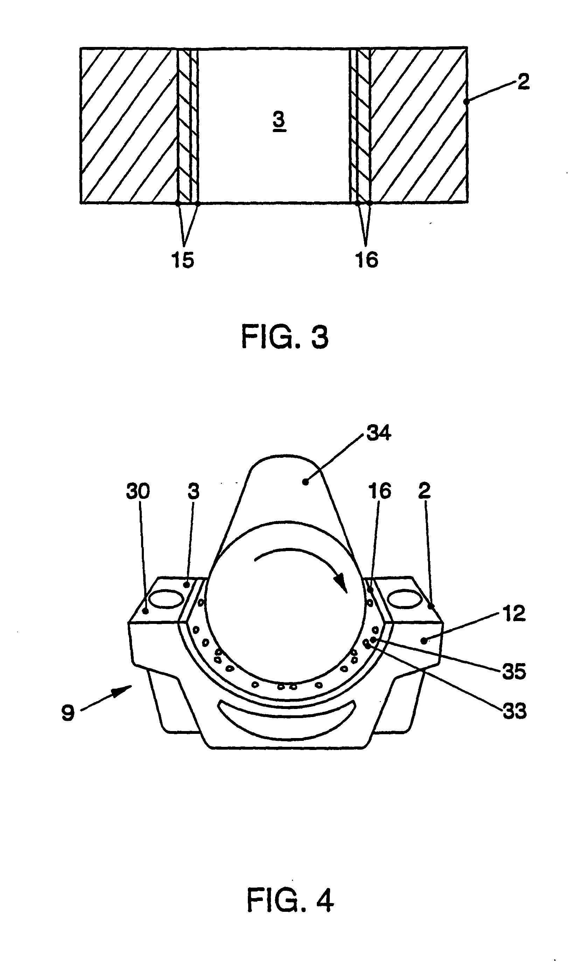

Das große Pleuelauge 3 und ggf. auch das kleine Pleuelauge 4 werden nun auf Maß 16 (Fig. 3) gebracht. Dies geschieht durch Feinbohren bzw. Feinspindeln. Anschließend wird das Pleuel einer kompletten Reinigung unterzogen, vermessen und klassiert.

### Fertigungsablauf geschnittenes Pleuel

Der Fertigungsablauf für ein geschnittenes Pleuel ist im wesentlichen mit dem oben beschriebenen Ablauf gleich, es wird jedoch das Pleuelauge bereits nach dem Räumen der Seitenflächen, der Kopfflächen und Schraubenauflagen durch Aufschneiden getrennt. Nach dem Aufschneiden werden die Trennflächen auf der Pleuelstange und dem Pleueldeckel einzeln geräumt. Hieran schließt sich ein Waschschritt an, nach dem das kleine Pleuelauge vor- und fertigbearbeitet wird. Nun werden die Deckelschrauben durch Einbringen von Bohrungen und Gewinden in die Seitenflächen eingebracht. Die Trennflächen an Pleuelstange und Pleueldeckel werden fertiggeschliffen, nochmal gewaschen und der Pleueldeckel auf die Pleuelstange montiert. Die Schnittfläche wird wieder mit einem FK-Laser gekerbt und anschließend wird das große Pleuelauge mit der Lagerschicht versehen, die anschließend wieder gebrochen wird.

Einzelne Fertigungsschritte, wie beispielsweise das Einpressen der Lagerschale 11 in das kleine Pleuelauge 4 können an unterschiedlichen Stellen des Gesamtablaufs erfolgen, beispielsweise auch bereits vor der Plasmabeschichtung.

### Fertigungsablauf Plasmabeschichtung des großen Pleuelauges

Für die Plasmabeschichtung werden die Pleuel gewaschen und das große Pleuelauge mit Heißdampf entfettet, danach praktisch Restfeuchte frei getrocknet. Die so vorbehandelten Pleuel werden zu 4 bis 8 Stück übereinander gestapelt, so daß die großen Pleuelaugen konzentrisch auf einer entsprechenden Öffnung einer Spezialpalette liegen. Die Pleuel werden dabei vorteilhaft über das vorbearbeitete kleine Pleuelauge und die Pleuelstange bzw. Seitenflächen ausgerichtet und fixiert. Die beladenen Paletten gelangen über eine Bereitstellzone in eine Sandstrahleinheit, in der das große Pleuelauge durch Sandstrahlen auf eine Mittenrauhtiefe Rₐ von ca. 8 bis 12 µm gebracht wird. Anschließend werden die Pleuel in eine Reinigungsstation gefahren und die gestrahlte Oberfläche mit Druckluft ab- bzw. ausgeblasen. Die vorbehandelten Pleuel fahren schließlich in die Plasmastation, in der das große Pleuelauge mit einem rotierenden Plasmabrenner in einer Schichtdicke 15 von ca. 0,5 mm mit einer Aluminiumbronze beschichtet wird (Fig. 3). Die beschichteten Pleuel kommen danach in eine Kühlzone, von der die abgekühlten Pleuel von der Spezialpalette entnommen und der oben beschriebenen Weiterbearbeitung zugeführt werden.

Die so hergestellten Pleuel haben den Vorteil, daß sie im großen Pleuelauge keine Lagerschale enthalten, somit entfällt auch die Lagerschalenmontage selbst sowie das Einbringen von Haltenuten bzw. das Entgraten der Lagerschalen. Hierdurch wird das Aufbringen der Plasmaschicht kostenmäßig wettbewerbsfähig. Außerdem ist bei den plasmabeschichteten Pleueln die Montagesicherheit erhöht, da keine Lagerschalen bei der Montage ausgelassen werden können.

Die Pleuel haben am großen Pleuelauge eine größere Stegbreite im Bereich der Lagerdeckelbefestigung, da die Plasmaschicht nach der Nachbearbeitung nur ca. 0,3 mm dick ist, eine Lagerschale jedoch 2,5 mm aufträgt. Hierdurch ist eine höhere Pleuelbelastung für höherbelastete Motoren und/oder eine Gewichtsersparnis möglich. Außerdem entfällt der Spalt zwischen zwei Lagerschalenhälften, an dem bei einer höheren Belastung der Ölfilm abzureißen beginnt. Die Pleuel haben somit bessere Schmiereigenschaften.

### Applikationsablauf

Wie bei den oben beschriebenen Fertigungsabläufen beschrieben, kann die Reinigung der zu beschichtenden und mit Radialnuten versehenen Oberfläche mit Heißdampf erfolgen. Hierbei wird eine praktisch 100 %ige Fettfreiheit erreicht. Das Sandstrahlen der Substratoberfläche (Eisenwerkstoff, z.B. C 70) erfolgt mit Al₂0₃ bei ca. 4 bis 6 bar Strahldruck und mit unterschiedlicher Körnung: Eine erste Strahloperation für die erodierte Bruchkerbe beim Crackpleuel oder beschnittenem Pleuel mit einer Körnung 0 0,063 bis 0,15 mm (230 bis 100 mesh). Eine zweite Strahloperation für die Substratoberfläche und die Radialnut mit einer Körnung Ø 0,18 bis 0,35 mm (80 bis 45 mesh) und eine dritte Strahloperation für die Substratoberfläche und die Radialnut mit einer Körnung von 0 0,6 bis 1,1 mm (30 bis 16 mesh). Als weiterer Arbeitsschritt schließt sich die Plasmabeschichtung mit einer Aluminium-Kupfer-Eisen-Legierung an, wobei beispielsweise eine Alubronze mit 5 bis 15 % Aluminium, 1 bis 5 % Eisen, 1 bis 4 % Kobalt und 0,5 bis 4 % Mangan, insbesondere Aluminium 9 bis 12 %. Mangan ca. 2 %, Kobalt ca. 2 bis 2,5 % und Eisen ca. 3 bis 4 % zum Einsatz kommen kann. Es erfolgt eine erste Plasmabeschichtung mit einer Schichtdicke von ca. 200 bis 250 µm mit einer Pulverkorngröße des Beschichtungsmaterials von durchschnittlich ca. 38 µm, wobei mit den Auftragsparametern, bezogen auf den jeweils verwendeten Brenner, eine Porosität in der Schicht ≤ 1 % eingestellt wird. Ohne Unterbrechung wird mit einem etwas gröberen Pulverkorn (Ø ca. 65 µm) weiterbeschichtet, wobei wiederum eine Schichtdicke von 200 bis 250 µm gebildet wird. Die Anlagenparameter werden hierbei so eingestellt, daß eine Porosität im Bereich 1,5 bis 3,5 % erreicht wird.

Diese erfindungsgemäße Art der Beschichtung kann auch bei Lagern ohne Radialnuten durchgeführt werden.

### Fertigungsablauf geschnittenes Pleuel mit Radialnuten

Im folgenden wird der gesamte Fertigungsablauf beschrieben.

Nach der Anlieferung der Rohpleuel werden diese auf die Fertigungsstraße gelegt, auf der ein Vorschleifen und Räumen der Planflächen 12 erfolgt. Anschließend werden die Seitenflächen 2, Kopfflächen und Schraubenauflagen geräumt und das große Pleuelauge getrennt. Danach folgt ein Räumen der Trennflächen 30 und des großen Pleuelauges 3, wobei die Pleuelstange und der Pleueldeckel 9 einzeln bearbeitet werden. Nach dem Waschen der Teile wird das kleine Pleuelauge 4 vor- und fertigbearbeitet und für die Pleueldeckelschrauben 10 werden die Bohrungen und Gewinde geschnitten. In das kleine Pleuelauge 4 wird die Lagerbuchse 11 eingepreßt, angepreßt und gefast. Die Trennflächen 30 der Pleuelstange und des Pleueldeckels 9 werden fertiggeschliffen und das ganze nochmals gewaschen.

Hiernach wird der Pleueldeckel 9 auf der Pleuelstange auf das vorgesehene Drehmoment angezogen und - beim Einsatz von Radialnuten 32 - die Nuten in das große Pleuelauge eingebracht, beispielsweise durch Fräsen oder Drehen.

Für ein späteres Öffnen der Plasmaschicht 15 oder 16 wird eine Bruchkerbe in das große Pleuelauge eingebracht, beispielsweise durch Erodieren oder Lasern. Hieran schließt sich die Plasmabeschichtung des großen Pleuelauges an.

Bei Bedarf, je nach Pleuelart, kann ein Ölkanal (vom großen Pleuelauge bis zum kleinen Pleuelauge durch die Pleuelstange hindurch) gebohrt werden, dies kann bei Benzinmotoren erfolgen und erfolgt meistens bei Dieselbrennkraftmaschinen.

Die aufgetragene Plasmaschicht 15 wird durch Lösen der Pleueldeckelschrauben 10 gecrackt, dies erfolgt - je nach Plasmabeschichtung - oftmals bereits durch die Eigenspannung der Plasmaschicht 15. Der Pleueldeckel 9 wird abgenommen und die Bruchstelle gereinigt, beispielsweise durch Abblasen. Anschließend wird der Pleueldeckel 9 wieder montiert und die Pleueldeckelschrauben 10 auf Drehmoment angezogen. Das große Pleuelauge wird beidseitig gefast und, je nach Alternative, werden die Kanten der Radialnuten gebrochen (gerundet).

Hiernach werden die Planflächen 12 fertiggeschliffen, das kleine Pleuelauge 4 fertiggebohrt und das große Pleuelauge 3 fertiggespindelt zur Erzeugung der eigentlichen Lauffläche 35 und Freilegen der Microporen 33 auf der Lagerschicht 16. Nach einem weiteren Waschvorgang werden die Pleuel vermessen und klassifiziert, wobei bevorzugt zwei Toleranzklassen gewählt werden.

Die so hergestellten Pleuel werden an der Montagelinie demontiert und an der Montagelinie auf der Kurbelwelle 34 einer Brennkraftmaschine montiert.

Nach der Plasmabeschichtung des großen Pleuelauges und gegebenenfalls Bohren des Ölkanals kann auch bereits das große Pleuelauge beidseitig gefast werden und, je nach Alternative, das Brechen der radialen Nutenkanten erfolgen. Hieran schließt sich dann das Fertigschleifen der Planflächen an, das kleine Pleuelauge wird fertiggebohrt und das große Pleuelauge fertiggespindelt. Nach einem Waschen und Vermessen der Pleuel mit Klassifizierung erfolgt dann, insbesondere direkt an der Montagelinie, das Cracken der Plasmaschicht durch Lösen der Pleueldeckelschrauben. Der Pleueldeckel wird abgenommen und die Bruchstelle durch beispielsweise Abblasen gereinigt. Dann wird das Pleuel auf der Kurbelwelle der Brennkraftmaschine montiert.

Vorteilhaft wird im Pleuel eine Verdrehsicherung des Deckels vorgesehen, beispielsweise durch einen leichten Versatz der Pleueldeckelschrauben-Bohrungen, damit die beim Cracken in der Plasmaschicht entstehenden Zacken wieder identisch zueinander geführt werden.

### Fertigungsablauf Crackpleuel

Das Rohpleuel (Material beispielsweise C70) wird auf die Fertigungsstraße gelegt und vorgeschliffen, wobei die Seitenwangen plan geschliffen werden. Es erfolgt die Vorbearbeitung des großen und kleinen Pleuelauges und die Schraubenlochbearbeitung für den Lagerdeckel (Bohren und Gewindeschneiden). Je nach Lagerart werden gewünschtenfalls eine oder mehrere Radialnuten in das große Pleuelauge eingebracht, beispielsweise durch Fräsen oder Drehen. Anschließend wird das große Pleuelauge gekerbt, beispielsweise mit einem FK-Laser, der unter 45° in das große Pleuelauge eingefahren wird; Laserleistung ca. 7 kW. Hierbei wird beidseitig eine Kerbe von ca. knapp 2 mm Breite und knapp 0,5 mm Tiefe mittig in das große Pleuelauge eingebracht. Die Kerbe kann auch über ein Räumwerkzeug oder durch Erodieren eingebracht werden. Das Pleuelauge wird über eine Brechvorrichtung mit einer Brechkraft von ca. 100 kN gecrackt. Der Pleuellagerdeckel wird abgenommen und die Bruchstelle, beispielsweise durch Druckluft, gereinigt. Der Pleuellagerdeckel wird anschließend wieder montiert und die Pleuellagerdeckelschrauben auf Drehmoment angezogen. Danach wird das große Pleuelauge plasmabeschichtet und in das kleine Pleuelauge die Lagerbuchse eingepreßt. Das große Pleuelauge wird beidseitig gefast, die Pleuelwangen werden fertiggeschliffen und das große und kleine Pleuelauge feingebohrt bzw. feingespindelt. Anschließend erfolgt eine komplette Reinigung (Waschen) und eine Vermessung und Klassifizierung des Pleuels. An der Montagelinie wird das Pleuel demontiert und auf die Kurbelwelle für eine Brennkraftmaschine montiert.

Das Cracken der Plasmaschicht, insbesondere durch Lösen der Pleueldeckelschrauben, kann direkt an der Montagelinie oder auch zu einem vorherigen Zeitpunkt erfolgen. Nach dem Cracken der Plasmaschicht ist es empfehlenswert die Pleueldeckelbruchstelle zu reinigen (abzublasen).

### Fertigungsablauf der Plasmabeschichtung

Das Pleuel wird gewaschen und zumindest das große Pleuelauge mit Heißdampf entfettet und anschließend auf einen möglichst niedrigen Restfeuchtegehalt getrocknet. Mehrere Pleuel werden auf einer Spezialpalette übereinander konzentrisch zum großen Pleuelauge gestapelt (in der Regel 4 bis 8 Pleuel). Die Fixierung kann hierbei über das kleine Pleuelauge und die Pleuelstange bzw. die Seitenflächen erfolgen. Die beladene Spezialpalette wird über eine Neutralzone in eine Sandstrahleinheit eingefahren und positioniert. Das große Pleuelauge wird mit den oben beschriebenen Sandklassifikationen auf eine Mittenrauhtiefe von ca. 6,5 bis 8 µm sandgestrahlt. Anschließend fährt die Spezialpalette mit den sandgestrahlten Pleueln in eine Reinigungsstation, in der die gestrahlte Oberfläche mit Druckluft abgeblasen bzw. ausgeblasen wird. Weiter fährt die Spezialpalette in die Plasmastation, in der das große Pleuelauge zuerst mit einer geringporösen und anschließend mit einer etwas poröseren Schicht aus Aluminiumbronze in einer Gesamtstärke von 0,5 mm plasmabeschichtet wird. Die beschichteten Pleuel fahren in eine Kühlzone, um nach dem Abkühlen von der Palette zur Weiterbearbeitung genommen zu werden.

Das Aufbringen des Lagerwerkstoffs durch thermisches Spritzen hat den Vorteil, daß die Lagerschalen und deren Montage sowie die Haltenuten und das Entgraten hierfür entfallen kann. Hierdurch wird die Montagesicherheit erhöht. Durch die Plasmabeschichtung erhält man eine größere Stegbreite (kleinerer Pleuelaugen-Durchmesser) im Bereich der Lagerdeckelbefestigung, da der Lagerschalendicke von ca. 2,5 mm eine Plasmaschicht von weniger als 0,5 mm gegenübersteht. Hierdurch ist eine höhere Pleuelbelastung in höher belasteten Motoren bzw. eine gewisse Ersparnis möglich. Außerdem entfällt der Spalt zwischen zwei Lagerschalenhälften, der konstruktionsbedingt unter Umständen zu einem Ölfilmabriß führen kann. Mit der Plasmabeschichtung erreicht man bessere Schmiereigenschaften. Gleichzeitig werden die Toleranzen reduziert, da eine Toleranzklasse durch die Plasmabeschichtung entfällt. Hiermit erreicht man durch geringere Fertigungstoleranzen einen besseren Motorlauf. Durch den Einsatz von Radialnuten in der Plasmabeschichtung erreicht man eine höhere Lagerbelastung und eine Reduzierung der Mischreibungszeit. Das Mikrodruckkammersystem verbessert die Reibwerte, insbesondere in Kombination mit einer oder mehreren Nuten. Die Nuten können auch mit einem anderen Gleitlagermaterial beschichtet werden, das nach einer spanabhebenden Bearbeitung der Beschichtung im wesentlichen nur noch in den Nuten vorliegt. Solche Lagermaterialien können auf Basis Blei, Zinn oder auch Nickel sein. Auch hiermit werden höhere Lagerbelastungen bzw. Standzeiten möglich.

## Patentansprüche

1. Verfahren zum Herstellen eines Pleuels mit einem Pleuelauge, in dem eine Lagerschicht angeordnet ist, die durch thermisches Spritzen eines Lagerwerkstoffes auf das Pleuelauge aufgebracht wird, **dadurch gekennzeichnet, dass** die thermisch gespritzte Lagerschicht zumindest an der Schichtoberseite mit Mikroporen hergestellt und auf einer unteren thermisch gespritzten Lagerschicht eine obere thermisch gespritzte Lagerschicht mit höherer Porosität aufgebracht wird.

2. Verfahren nach Anspruch 1, **dadurch gekennzeichnet, daß** die Porosität 0,2 bis 10 % beträgt.

3. Verfahren nach Anspruch 1 oder 2, **dadurch gekennzeichnet, daß** eine spanabhebende Nachbearbeitung bis in die untere thermisch gespritzte Lagerschicht mit niedriger Porosität erfolgt.

4. Verfahren nach den Ansprüchen 1 bis 3, **dadurch gekennzeichnet, dass** die Lagerschicht mit einer Nut hergestellt wird.

5. Verfahren nach Anspruch 4, **dadurch gekennzeichnet, dass** mehrere Nuten in die Lagerschicht eingesetzt werden.

6. Verfahren nach einem der Ansprüche 4 oder 5, **dadurch gekennzeichnet, daß** die Nut eine V- oder Trapezform hat.

7. Verfahren nach Anspruch 6, **dadurch gekennzeichnet, daß** der Winkel der Nutflanken 30° bis 80° beträgt.

8. Verfahren nach einem der Ansprüche 4 bis 7, **dadurch gekennzeichnet, daß** die Nuttiefe 0,2 bis 1 mm beträgt.

9. Verfahren nach einem der Ansprüche 4 bis 8, **dadurch gekennzeichnet, daß** die Nut vor dem thermischen Spritzen eingebracht wird.

10. Verfahren nach einem der Ansprüche 4 bis 9, **dadurch gekennzeichnet, daß** die Nut einen Radialanteil hat.

11. Verfahren nach Anspruch 10, **dadurch gekennzeichnet, daß** die Nut geschlossen ist.

12. Verfahren nach Anspruch 11, **dadurch gekennzeichnet, daß** die Nut ringförmig ist.

13. Verfahren nach Anspruch 4 oder 5, **dadurch gekennzeichnet, daß** die Nut nicht oder weniger nachbearbeitet ist als die restliche Lagerschicht.

14. Verfahren nach Anspruch 1, **dadurch gekennzeichnet, daß** der Lagerwerkstoff mittels Plasmaspritzen aufgebracht wird.

15. Verfahren nach einem der vorhergehenden Ansprüche, **dadurch gekennzeichnet, daß** als Lagerwerkstoff ein Metall aufgebracht wird.

16. Verfahren nach Anspruch 1, **dadurch gekennzeichnet, daß** nach dem Aufbringen des Lagerwerkstoffes die Planflächen des Pleuels nachbearbeitet werden.

17. Verfahren nach Anspruch 1, **dadurch gekennzeichnet, daß** vor dem Aufbringen des Lagerwerkstoffes das Pleuelauge aufgerauht wird.

18. Verfahren nach Anspruch 17, **dadurch gekennzeichnet, daß** das Pleuelauge auf eine Mittenrauhtiefe R_{A} von 4 bis 30 µm aufgerauht wird.

19. Verfahren nach Anspruch 1, **dadurch gekennzeichnet, daß** mehrere Pleuel mit ihrem mit dem Lagerwerkstoff zu beschichtenden Pleuelauge konzentrisch übereinanderliegend behandelt werden.

20. Verfahren nach Anspruch 1, **dadurch gekennzeichnet, daß** das thermische Spritzen mit einem Vorschub von 0,5 bis 20 mm/s durch das Pleuelauge durchgeführt wird.

21. Verfahren nach Anspruch 1, **dadurch gekennzeichnet, daß** der Lagerwerkstoff in einer Dicke, ggf. nach einer Nachbearbeitung, von 150 bis 800 µm, hergestellt wird.

22. Verfahren nach einem der vorhergehenden Ansprüche, **dadurch gekennzeichnet, daß** das Pleuelauge durch Kerben und Brechen geöffnet wird.

23. Verfahren nach Anspruch 1, **dadurch gekennzeichnet, daß** während des thermischen Spritzens ein Gasstrom, mit einer Strömungsgeschwindigkeit von 3 bis 15 m/s durch das Pleuelauge geführt wird.

24. Pleuel mit einem Pleuelauge, in dem eine Lagerschicht ist, die durch thermisches Spritzen eines Lagerschichtmaterials auf dem Pleuelauge aufgebracht ist, **dadurch gekennzeichnet, daß** die Lagerschicht zumindest an der Schichtoberseite Mikroporen aufweist und auf einer unteren thermisch gespritzten Lagerschicht eine obere thermisch gespritzte Lagerschicht mit höherer Porosität aufgebracht ist.

25. Pleuel nach Anspruch 24, **dadurch gekennzeichnet, daß** die Porosität 0,2 bis 10 % beträgt.

26. Pleuel nach Anspruch 24 oder 25, **dadurch gekennzeichnet, daß** die Mikroporen im Bereich 0,2 bis 250 µm mindestens 50 % des Porenvolumens bilden.

27. Pleuel nach Anspruch 24, **dadurch gekennzeichnet, daß** die Porosität überwiegend aus geschlossenen Poren gebildet ist.

28. Pleuel nach einem der Ansprüche 24 bis 27, **dadurch gekennzeichnet, daß** in der Lagerschicht eine Nut ist.

29. Pleuel nach Anspruch 28, **dadurch gekennzeichnet, daß** die Nut einen Radialanteil hat.

30. Pleuel nach Anspruch 29, **dadurch gekennzeichnet, daß** die Nut geschlossen, insbesondere ringförmig, ist.

31. Pleuel nach Anspruch 28, **dadurch gekennzeichnet, daß** es mehrere Nuten in der Lagerschicht enthält.

32. Pleuel nach Anspruch 28, **dadurch gekennzeichnet, daß** die Nut vor dem thermischen Spritzen eingebracht ist.

33. Pleuel nach Anspruch 28, **dadurch gekennzeichnet, daß** eine spanabhebende Nachbearbeitung bis in die untere thermisch gespritzte Lagerschicht mit niedriger Porösität erfolgt ist.

34. Pleuel nach Anspruch 33, **dadurch gekennzeichnet, daß** die Nut weniger oder gar nicht spanabhebend nachbearbeitet ist.

## Claims

1. Method for producing a connecting rod with a connecting-rod eye, in which a bearing layer is arranged, applied to the connecting-rod eye by thermal spraying of a bearing material, **characterized in that** the thermally sprayed bearing layer is produced at least on the top side of the layer with micropores and an upper, thermally sprayed bearing layer with a relatively high porosity is applied to a lower, thermally sprayed bearing layer.

2. Method according to Claim 1, **characterized in that** the porosity is 0.2 to 10%.

3. Method according to Claim 1 or 2, **characterized in that** cutting aftertreatment is carried out as far as into the lower, thermally sprayed bearing layer with a relatively low porosity.

4. Method according to Claims 1 to 3, **characterized in that** the bearing layer is produced with a groove.

5. Method according to Claim 4, **characterized in that** a plurality of grooves are inverted into the bearing layer.

6. Method according to either of Claims 4 and 5, **characterized in that** the groove has a V shape or is trapezoidal.

7. Method according to Claim 6, **characterized in that** the angle of the groove flanks is 30° to 80°.

8. Method according to one of Claims 4 to 7, **characterized in that** the depth of the groove is 0.2 to 1 mm.

9. Method according to one of Claims 4 to 8, **characterized in that** the groove is introduced before the thermal spraying.

10. Method according to one of Claims 4 to 9, **characterized in that** the groove has a radial component.

11. Method according to Claim 10, **characterized in that** the groove is closed.

12. Method according to Claim 11, **characterized in that** the groove is annular.

13. Method according to Claim 4 or 5, **characterized in that** the groove is not subjected to aftertreatment or is subjected to less aftertreatment than the rest of the bearing layer.

14. Method according to Claim 1, **characterized in that** the bearing material is applied by means of plasma spraying.

15. Method according to one of the preceding claims, **characterized in that** the bearing material applied is a metal.

16. Method according to Claim 1, **characterized in that** the planar faces of the connecting rod are subjected to aftertreatment after the bearing material has been applied.

17. Method according to Claim 1, **characterized in that** the connecting-rod eye is roughened before the bearing material is applied.

18. Method according to Claim 17, **characterized in that** the connecting-rod eye is roughened to an average roughness R_{A} of 4 to 30 µm.

19. Method according to Claim 1, **characterized in that** a plurality of connecting rods are treated with their connecting-rod eye that is to be coated with the bearing material lying concentrically one on top of the other.

20. Method according to Claim 1, **characterized in that** the thermal spraying is carried out through the connecting-rod eye at a feed rate of 0.5 to 20 mm/s.

21. Method according to Claim 1, **characterized in that** the bearing material is produced in a thickness, if appropriate after aftertreatment, of 150 to 800 µm.

22. Method according to one of the preceding claims, **characterized in that** the connecting-rod eye is opened by notching and rupturing.

23. Method according to Claim 1, **characterized in that** a stream of gas is conducted through the connecting-rod eye at a flow rate of 3 to 15 m/s during the thermal spraying.

24. Connecting rod with a connecting-rod eye, in which a bearing layer is arranged, applied to the connecting-rod eye by thermal splaying of a bearing layer material, **characterized in that** the bearing layer has micropores at least on the top side of the layer and an upper, thermally sprayed bearing layer with a relatively high porosity is applied to a lower, thermally sprayed bearing layer.

25. Connecting rod according to Claim 24, **characterized in that** the porosity is 0.2 to 10%.

26. Connecting rod according to Claim 24 or 25, **characterized in that** the micropores in the range of 0.2 to 250 µm form at least 50% of the pore volume.

27. Connecting rod according to Claim 24, **characterized in that** the porosity is formed predominantly from closed pores.

28. Connecting rod according to one of Claims 24 to 27, **characterized in that** a groove is provided in the bearing layer.

29. Connecting rod according to Claim 28, **characterized in that** the groove has a radial component.

30. Connecting rod according to Claim 29, **characterized in that** the groove is closed, in particular annular.

31. Connecting rod according to Claim 28, **characterized in that** there are a plurality of grooves in the bearing layer.

32. Connecting rod according to Claim 28, **characterized in that** the groove is introduced before the thermal spraying.

33. Connecting rod according to Claim 28, **characterized in that** cutting aftertreatment has been carried out as far as into the lower, thermally sprayed bearing layer with a relatively low porosity.

34. Connecting rod according to Claim 33, **characterized in that** the groove is subjected to less cutting aftertreatment or is not subjected to cutting aftertreatment at all.

## Revendications

1. Procédé de fabrication d'une bielle dotée d'un oeilleton de bielle, dans lequel une couche de palier est disposée, qui est appliquée par pulvérisation thermique d'un matériau de palier sur l'oeilleton de bielle,
**caractérisé en ce que**
la couche de palier pulvérisée thermiquement est dotée de micropores au moins sur le côté supérieur de la couche et
**en ce qu'**une couche supérieure de palier pulvérisée thermiquement et à haute morosité est appliquée sur une couche inférieure de palier pulvérisée thermiquement.

2. Procédé selon la revendication 1, **caractérisé en ce que** la porosité est comprise entre 0,2 et 10 %.

3. Procédé selon les revendications 1 ou 2, **caractérisé en ce qu'**un usinage d'enlèvement de matière a lieu jusque dans la couche inférieure de palier pulvérisée thermiquement et à basse porosité.

4. Procédé selon les revendications 1 à 3, **caractérisé en ce que** la couche de palier est dotée d'une rainure.

5. Procédé selon la revendication 4, **caractérisé en ce que** plusieurs rainures sont ménagées dans la couche de palier.

6. Procédé selon l'une des revendications 4 ou 5, **caractérisé en ce que** la rainure a la forme d'un V ou d'un trapèze.

7. Procédé selon la revendication 6, **caractérisé en ce que** l'angle des flancs de la rainure est compris entre 30° et 80°.

8. Procédé selon l'une des revendications 4 à 7, **caractérisé en ce que** la profondeur de la rainure est comprise entre 0,2 et 1 mm.

9. Procédé selon l'une des revendications 4 à 8, **caractérisé en ce que** la rainure est ménagée avant la pulvérisation thermique.

10. Procédé selon l'une des revendications 4 à 9, **caractérisé en ce que** la rainure présente une partie radiale.

11. Procédé selon la revendication 10, **caractérisé en ce que** la rainure est fermée.

12. Procédé selon la revendication 11, **caractérisé en ce que** la rainure a une forme annulaire.

13. Procédé selon les revendications 4 ou 5, **caractérisé en ce que** la rainure n'est pas usinée ou est moins usinée que le reste de la couche de palier.

14. Procédé selon la revendication 1, **caractérisé en ce que** le matériau de palier est appliqué par pulvérisation au plasma.

15. Procédé selon l'une des revendications précédentes, **caractérisé en ce que** le matériau de palier appliqué est un métal.

16. Procédé selon la revendication 1, **caractérisé en ce que** les surfaces planes de la bielle sont usinées après l'application du matériau de palier.

17. Procédé selon la revendication le **caractérisé en ce que** l'oeilleton de bielle est t rendu rugueux avant l'application du matériau de palier.

18. Procédé selon la revendication 17, **caractérisé en ce que** l'oeilleton de bielle est rendu rugueux jusqu'à une profondeur moyenne de rugosité R_{A} de 4 à 30 µm.

19. Procédé selon la revendication 1, **caractérisé en ce que** plusieurs bielles superposées sont traitées en superposant concentriquement les oeilletons de bielle qui doivent être revêtus par le matériau de palier.

20. Procédé selon la revendication 1, **caractérisé en ce que** la pulvérisation thermique est réalisée à une vitesse d'avancement de 0,5 à 20 mm/s à travers l'oeilleton de bielle.

21. Procédé selon la revendication 1, **caractérisé en ce que** le matériau de palier est appliqué à une épaisseur de 150 à 800 µm, éventuellement après un traitement de finition.

22. Procédé selon l'une des revendications précédentes, **caractérisé en ce que** l'oeilleton de bielle est ouvert par entaillage et rupture.

23. Procéda selon la revendication 1, **caractérisé en ce que** pendant la pulvérisation thermique, l'oeilleton de bielle est traversé par un écoulement de gaz dont la vitesse d'écoulement est de 3 à 15 m/s.

24. Bielle dotée d'un oeilleton de bielle dans lequel une couche de palier est appliquée par pulvérisation thermique d'un matériau de couche de palier sur l'oeilleton de
**caractérisée en ce que**
la couche de palier présente des micropores au moins sur le côté supérieur de la couche et
**en ce qu'**une couche supérieure de palier pulvérisée thermiquement et à porosité plus élevée est appliquée sur une couche inférieure de palier appliquée thermiquement.

25. Bielle selon la revendication 24, **caractérisée en ce que** la porosité est comprise entre 0,2 et 10 %.

26. Bielle selon les revendications 24 ou 25, **caractérisée en ce que** les micropores compris dans la plage de 0,2 à 250 µm représentent au moins 50 % du volume des pores.

27. Bielle selon la revendication 24, **caractérisée en ce que** la porosité est formée principalement de pores fermés.

28. Bielle selon l'une des revendications 24 à 27, **caractérisée en ce qu'**une rainure est prévue dans la couche de palier.

29. Bielle selon la revendication 28, **caractérisée en ce que** la rainure présente une partie radiale.

30. Bielle selon la revendication 29, **caractérisée en ce que** la rainure est fermée et en particulier a une forme annulaire.

31. Bielle selon la revendication 28, **caractérisée en ce qu'**elle présente plusieurs rainures dans la couche de palier.

32. Bielle selon la revendication 28, **caractérisée en ce que** la rainure est ménagée avant la pulvérisation thermique.

33. Bielle selon la revendication 28, **caractérisée en ce qu'**un traitement d'enlèvement de matière est réalisé jusque dans la couche inférieure de palier pulvérisée thermiquement et à basse porosité.

34. Bielle selon la revendication 33, **caractérisée en ce que** la rainure est moins usinée ou n'est même pas usinée par enlèvement de matière.
